# EUROPEAN PATENT APPLICATION

(11) **EP 4 531 125 A1**
(43) Date of publication of application: **02.04.2025**
(21) Application number: 23200391.3
(22) Date of filing: 28.09.2023
(51) Int. Cl.: H01M 4/04, H01M 4/66

(54) **A SYSTEM FOR PROCESSING AN ELECTRODE FOIL**

(71) Applicant: CUSTOMCELLS Holding GmbH, 25524 Itzehoe (DE)
(72) Inventor: Otepov, Sultan, 25524 Itzehoe (DE)
(74) Representative: LKGLOBAL Lorenz & Kopf Patentanwalt Attorney at Law PartG mbB

(57) **Abstract**

The invention relates to a system (100a, 100b, 100c, 100d) for processing an electrode foil (f), comprising a metal application unit (105, 105a, 105b). The metal application unit (105, 105a, 105b) comprises a housing (110) providing an application space (115), wherein the metal application unit (105, 105a, 105b) is configured to control atmospheric conditions in the application space (115), the housing (110) comprising an inlet (120) and an outlet (125) configured to let an electrode foil (f) pass through the application space (115). Furthermore, the metal application unit (105, 105a, 105b) comprises a molten-metal gas atomizer unit (130) configured to spray metal particles (p) onto at least one first surface (s1) of the electrode foil (f) in the application space (115).

## Description

### FIELD OF THE DISCLOSURE

The present disclosure relates to a system for processing an electrode foil.

### BACKGROUND

Batteries play a critical role in modern society, powering a wide range of devices from portable electronics to electric vehicles. Rechargeable batteries, also referred to as secondary batteries, are often preferred due to their reusability.

The increasing demand for portable electronics and electric vehicles has led to a growing need for batteries with higher energy density, longer lifespan (including number of possible charging cycles of a secondary battery), and improved safety. Furthermore, the shift towards renewable energy sources such as solar and wind power has increased the need for energy storage systems, making batteries an essential technology in the transition to a low-carbon economy.

Due to the importance of batteries, there is a high demand to improve the efficiency and lifespan of batteries, including the battery electrodes (i.e., the anode or the cathode). Battery electrodes are conductive materials that serve as the positive and negative terminals in a battery.

Secondary batteries are based on the principle of moving metal ions as charge carriers from a cathode to an anode and vice versa. These secondary batteries experience a loss of these ions in the first charging step of the formation often referred to as first cycle efficiency. If left uncompensated the loss of metal ions causes a lower gravimetric and volumetric energy density and therefore worsens key characteristics of the secondary battery cell.

This loss is due to the formation of protective layers on the active material. These so-called SEI (solid electrolyte interface) are essential for the function of the cell as they prevent the penetration of electrolyte molecules into the anode material.

Accordingly, pre-metalation of the anodes has been proposed as a way to compensate for the consumption of metal ions in irreversible reactions during the formation of the solid electrolyte interface layer in the initial cycling. By introducing additional metal of the charge carrier species, the consumption of the solid electrolyte interface may be compensated, leading to improved battery performance.

Presently, various techniques exist for the direct application of a lithium metal film onto a substrate or electrode, typically referred to as a direct-contact method.

US7588623B2 relates to a method of stabilizing lithium metal powder. The method includes the steps of heating lithium metal to a temperature above its melting point, spraying the molten lithium metal through an atomizer nozzle to provide droplets, and fluorinating the droplets during flight to provide a stabilized lithium metal powder.

Moreover, US20210184208A1 describes a method of forming a negative electrode, comprising forming a lithium metal film on a negative electrode; forming an interface film on the lithium metal film; and forming a protective film on the interface film, wherein the interface film is either a release film, a metal fluoride film, or a metal oxide film.

US20200189874A1 describes another method and apparatus for lithium anode device stack manufacturing. The method comprises a step of forming a lithium metal film on a current collector, wherein the current collector comprises copper; a step of forming a metal film on the lithium metal film, wherein the metal film is selected from a copper film, a bismuth film, a tin film, or combinations thereof; and a step of forming a protective film formed on the metal film, wherein the protective film is a lithium-ion conducting film selected from the group comprising lithium-ion conducting ceramic, lithium-ion conducting glass, or ion conducting liquid crystal.

### SUMMARY OF THE DISCLOSURE

Currently, it remains desirable to provide an indirect-contact system for a continuous electrode foil manufacturing process.

Therefore, the present disclosure relates to a system for processing an electrode foil, comprising a metal application unit comprising a housing providing an application space, wherein the metal application unit is configured to control atmospheric conditions in the application space. The housing comprises an inlet and an outlet configured to let an electrode foil pass through the application space. The metal application unit further comprises a molten-metal gas atomizer unit configured to spray metal particles onto at least one first surface of the electrode foil in the application space.

The electrode foil may be used in a battery cell, in particular a secondary battery. The electrode foil may be a metalated battery electrode foil and/or a lithium-metal electrode foil (i.e., where the Li is directly applied onto the copper substrate).

The housing may be an encasing structure, that may surround or contain the application space. The housing may be configured such that the application space may be evacuated and/or be purged with an inert atmosphere. In other words, the application space may be filled with a gas that does not react with any components or materials of the system. In particular, the gas may not react with the metal particles.

The electrode foil may pass through the application space while stops of the constantly moving foil may be possible, e.g., in case more metal has to be deposited to meet the lithium loading requirements. In other words, the electrode foil may stop while the metal particles are sprayed onto at least one first surface of the electrode foil in the application space.

The electrode foil may be characterized by a flat configuration, delineating a plane. The electrode foil may have a plurality of layers. The electrode foil may be positioned to facilitate uniform coverage during the process of being sprayed by the molten-metal gas atomizer unit. The metal particles may adhere to the first surface of the electrode foil upon coming into contact with it. In other words, once metal particles make contact to the first surface of the electrode foil, they possibly tend to stay in place rather than bouncing back. The metal particles may solidify to form a coating of the electrode foil.

Metal particles may be in situ generated metal microparticles. Furthermore, metal particles may be nanoparticles or microparticles. Metal particles may be in a liquid, a solid state or anything in between. Metal particles may be sprayed onto at least one first surface of the electrode, desirably over the complete extension of the first surface, or over a predefined area of the first surface.

The molten-metal gas atomizer may disperse molten metal and generate metal particles. The molten-metal gas atomizer unit may provide a gas stream. The gas stream may carry the metal particles, while the controlled distribution of gas flow and particle dispersion may enhance the precision and uniformity of their application onto the electrode foil. In other words, the molten metal particles (or metal droplets) may be atomized (i.e., turned into microdroplets suspended in fluid) in a gas current.

Different metals may be used to be melted and sprayed onto the electrode foil. The metal to be melted may be in form of powder before it is melted. The powder may have a particle smaller than 1 µm.

The system may comprise operational parameters. Operational parameters may comprise molten metal temperature, molten metal flow rate, gas flow rate, gas temperature, nozzle-to-anode distance, and electrode foil (or anode) movement speed. These parameters may separately and/or in combination with each other eventually control the thickness and microstructure of the deposited metal. This, in turn, may define the quality of the following pre-metalation reaction. A computational approach may help to narrow down the range of these parameters before designing the equipment to carry out the process.

By providing such a system the process of metalation of the electrode foil may be optimized for secondary batteries. Generally, the term "metalation" may be understood as "adding metal" to the metal foil or any other substrate.

In particular, it becomes possible to add metal atoms to the electrode foil (e. g. Li, Na, K, Mg, Ca, Al). The metal atoms may migrate (diffuse) into electrode foil, as well as alloy or react with the components of the electrode foil.

The advantage of the system may be to generate metal particles in a semisolid or molten state, thereby preventing their rebounding from the surface of electrode foil and ensuring their adhesion to form a coherent coating. The realization of this concept may hinge on the potential to regulate the temperature of the gas, offering a theoretical avenue to achieve the desired outcome.

Furthermore, the system of the present disclosure provides the following advantages. The metal particles may be in active form, so that metalation reaction may proceed faster to a higher extent. Protective coating in the cell may not be necessary because pure metal may be used. Contaminant or inactive materials may be avoided. Precise calendering may be omitted so that unwanted disadvantages of calendering may be avoided, such as variation due to surface inhomogeneity of both anode and metal film. Furthermore, contamination of the electrode foil due to release layers may be avoided. Removal of the solvent (drying), activation of the metal, or liquid-solid interactions may be avoided, too. This may mean that this technique may possibly be implemented for a wider range of anode chemistries with minimal adjustments in the process. Moreover, the necessity to attain a high-purity vacuum, which may be challenging for anode materials due to the presence of absorbed gases within their pores, may be circumvented. Another advantage may be the potential directional capability of the molten-metal gas atomizer, facilitated by the controlled flow of the spraying gas. This configuration may optimally direct a significant portion of the metal towards the electrode foil.

Another advantage may be the continuous deposition of metal onto the electrode foil. The system may enable the ongoing movement of the electrode foil through the application space, enhancing the efficiency of the manufacturing process.

In one aspect, the molten-metal atomizer unit may comprise at least of: a crucible, a first injection piston unit, and a first injection nozzle.

The crucible may be of different material depending of the metal which is to be molten. For example, a metal with a higher melting point than the melting point of the metal to be melted. For melting lithium or other low melting point metal, for example, another metal with a high melting point, e.g., alumina, magnesium oxide and/or pyrolytic boron nitride may be used as material of the crucible. For melting aluminum, the material of the crucible may be based, for example, on graphite, silicon graphite or alumina.

The atomizer unit may have a first injection nozzle (or spray gun) configured to spray the metal nanoparticles or metal microparticles. The first injection nozzle may project the molten or semi-molten metal particles onto the surface to be coated.

In one aspect, the molten-metal atomizer unit may be configured to melt the metal in the crucible. Furthermore, the molten-metal atomizer unit may be configured to feed the molten metal through the first injection nozzle into a gas flow, such that molten metal droplets are atomized to form the metal particles.

The metal may be melted in the crucible by heating the metal to a controlled temperature, e.g., using an inductive heating unit. Each metal may have different melting points (m.p.). For example, the melting points may be as follows: Li m.p. 180 °C, Na m.p. 98 °C, Mg m.p. 650 °C.

There may be different ways to atomize the metal droplets to form the metal particles. For example, liquid macro droplets may be turned into smaller particles by the atomizer. Smaller particles may be, for example, nanoparticles or microparticles. The particles may also be nanodroplets or microdroplets (e.g., in case it is still liquid) suspended in gas. Solid particles may not be atomized, so the molten metal may still be liquid when it comes out of the first injection nozzle.

In one aspect, the crucible may be arranged in a gas chamber configured such that the metal is molten under controlled atmospheric conditions using a predefined gas.

The gas chamber may be deliberately isolated from the operational equipment. This arrangement may streamline the process of loading the crucible with lithium, providing a simplified sequence: the chamber may be opened, lithium may be introduced, the chamber may be sealed, the atmosphere may be evacuated, and gas may be introduced. The quantity of lithium placed into the crucible may be adequately suffice for the rolling procedure. In the event of surplus lithium, the heating process may be paused, prompting the lithium to solidify. The chamber may then be reopened, additional lithium may be added, and the operation may be recommenced in preparation for the subsequent rolling sequence.

In one aspect, the molten-metal gas atomizer unit may comprise a first gas nozzle configured to generate the gas flow.

The gas used for the gas flow may be a predefined gas of the gas chamber. This may mean that it originates from the same source like the gas of the gas chamber, or desirably from another source.

In one aspect, the metal may comprise at least one of: an alkali metal, such as lithium (Li) and sodium (Na), Potassium (K), and an alkaline earth metal, such as magnesium (Mg), and/or the predefined gas and/or the gas of the gas flow is an inert gas, such as Argon.

In one aspect, the molten-metal gas atomizer unit may be configured to spray metal particles onto the first surface of the electrode foil in the application space at different positions along an extension between the inlet and the outlet.

For example, spraying metal particles at different positions may be achieved by providing several injection nozzles arranged on the same side of the foil. The several injection nozzles may be arranged along the movement direction of the foil to apply metal layers stepwise.

In one aspect, the molten-metal gas atomizer unit may further be configured to spray metal particles onto a second surface of the electrode foil in the application space, the second surface being opposite to the first surface.

In other words, the metal particles may be applied to both sides of the electrode foil. This may mean that the electrode foil may be coated with metal particles.

In one aspect, the molten-metal gas atomizer unit may further comprise at least of: a second injection piston unit, and a second injection nozzle.

In one aspect, the molten-metal atomizer unit may further be configured to: feed the molten metal through the second injection nozzle into a gas flow, such that molten metal droplets are atomized to form the metal particles, wherein the second injection nozzle is configured to spray metal particles onto the second surface.

In other words, this may imply that both surfaces of the electrode foil may undergo metal particle spraying.

In one aspect, the system may further comprise a protective foil application unit configured to apply a protective foil onto the at least one first surface, after the electrode foil has passed through the application space. The protective foil may be added to isolate the subsequent layers of the metalated electrode foil from each other for the duration of the metalation reaction.

A protective foil may be, for example, a plastic foil. If metal is applied on the first surface and second surface of the electrode foil, the protective foil may also be applied only on the first surface. In case the reaction is fast enough, the foil may be rolled up without the protective foil.

In one aspect, the system may further comprise a calendering unit configured to calender the electrode foil and the applied protective foil.

The battery electrode foil and the applied protective foil may form a layer assembly. The calendering unit may improve the reaction of the metal particles with the electrode foil. This may mean that the calendering unit may make the reaction more homogenous.

In one aspect, the system may further comprise a winding unit configured to wind up the electrode foil and optionally the applied protective foil. The electrode foil may be wound up under a predefined tension applied to the electrode foil.

In one aspect, the system may further comprise a feeding unit for feeding the electrode foil to the metal application unit with a controlled feeding speed.

A drying unit may be part of the feeding unit configured to dry the electrode foil before it is fed to the metal application unit.

The present disclosure also relates to a method of preparing a metalated electrode foil. The method may comprise passing the electrode foil through an application space having controlled atmospheric conditions. Furthermore, the method may comprise spraying metal particles onto at least one first surface of the electrode foil in the application space.

In other words, the method relates to metalating an electrode foil. This may involve the application of a metal layer onto the surface of the electrode foil and the migration of metal ions from the metal particles to the electrode foil.

The system and the method provided by the present disclosure may be used to produce Li-metal electrodes for solid-state Li-metal batteries.

The technology provided by the present disclosure may be applied in various types of batteries such as lithium-ion secondary batteries. Other compatible examples of batteries may be sodium-ion batteries, potassium-ion batteries, magnesium-ion batteries, calcium-ion batteries or aluminum-ion batteries.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

### BRIEF DESCRIPTION OF THE DRAWINGS

Fig. 1A schematically shows a system 100a for processing an electrode foil f according to examples of the present disclosure.
Fig. 1B schematically shows a system 100b with an unwinding unit 175 and a winding unit 180 for processing an electrode foil according to examples of the present disclosure.
Fig. 1C shows a horizontal arrangement of a system 100c according to examples of the present disclosure.
Fig. 1D shows a vertical arrangement of a system 100d according to examples of the present disclosure.
Fig. 2 shows a flowchart of a method 200 of preparing a metalated electrode foil m according to examples of the present disclosure.
Fig. 3A shows an exemplary multi-layer metal electrode battery with a metalated electrode foil m after the manufacturing process with a system 100a, 100b, 100c or 100c according to examples of the present disclosure.
Fig. 3B shows a method 200 of preparing a metalated electrode foil m according to examples of the present disclosure.

### DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

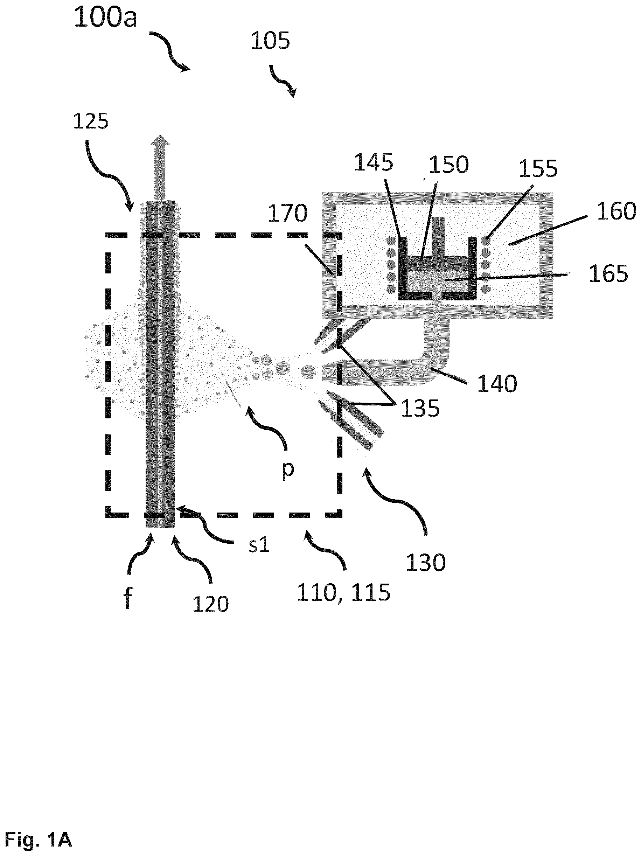

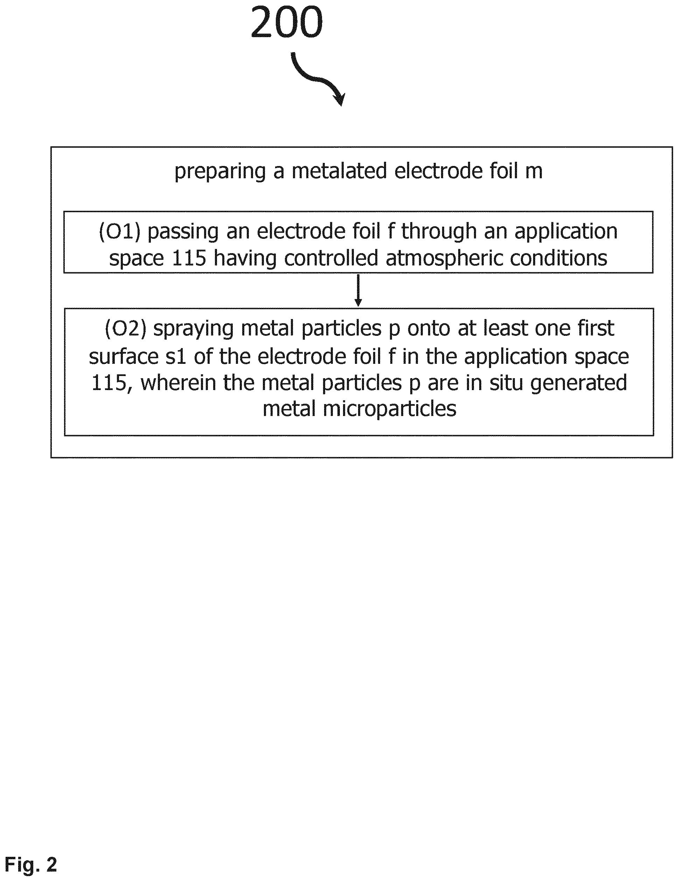

Fig. 1A schematically shows a system 100a for processing an electrode foil f according to examples of the present disclosure. The system may perform a method for metalating an electrode foil m, as described e.g., in context of fig. 2.

The system 100a comprises a metal application unit 105 to apply metal onto the electrode foil f. The metal application unit 105 comprises a housing 110 providing an application space 115. Furthermore, the metal application unit 105 comprises a molten-metal gas atomizer unit 130 configured to spray metal particles p onto at least one first surface s1 of the electrode foil f in the application space 115.

The metal particles p are in a liquid state and adhere to the first surface s1 of the electrode foil f upon coming into contact with it. The metal particles p solidify to form a coating of the electrode foil f. It is noted that the particles may already solidify, or at least partially solidify during their flight from the gas atomizer unit 130 towards the surface s1.

The metal application unit 105 is configured to control atmospheric conditions in the application space 115. The housing 110 comprises an inlet 120 and an outlet 125 configured to let an electrode foil f pass through the application space 115.

The molten-metal atomizer unit 130 comprises a crucible 145, a first injection piston unit 150, and a first injection nozzle 140. The molten-metal atomizer also comprises an inductive heating unit 155 to heat up the metal in the crucible 145. The molten-metal gas atomizer unit 130 is configured to melt the metal in the crucible 145, and feed the molten metal 165 through the first injection nozzle 140 into a gas flow, such that molten metal droplets are atomized to form the metal particles p. The first injection piston unit 150 serves the purpose of exerting pressure on the molten metal 165, facilitating its passage through the first injection nozzle 140. The molten-metal gas atomizer unit 130 comprises a first gas nozzle 135 configured to generate the gas flow. The first gas nozzle 135 is configured to control the flow rate and temperature of a gas, in particular an inert gas, e.g., argon.

The crucible 145 is arranged in a gas chamber 170 configured such that the metal is molten under controlled atmospheric conditions using a predefined gas 160, in particular an inert gas. Specifically, the predefined gas 160 utilized is argon. Notably, the metal remains uncontaminated and pure due to the non-reactive nature of argon safeguarding its integrity from any potential contamination (i.e., argon serves as an inert shielding gas).

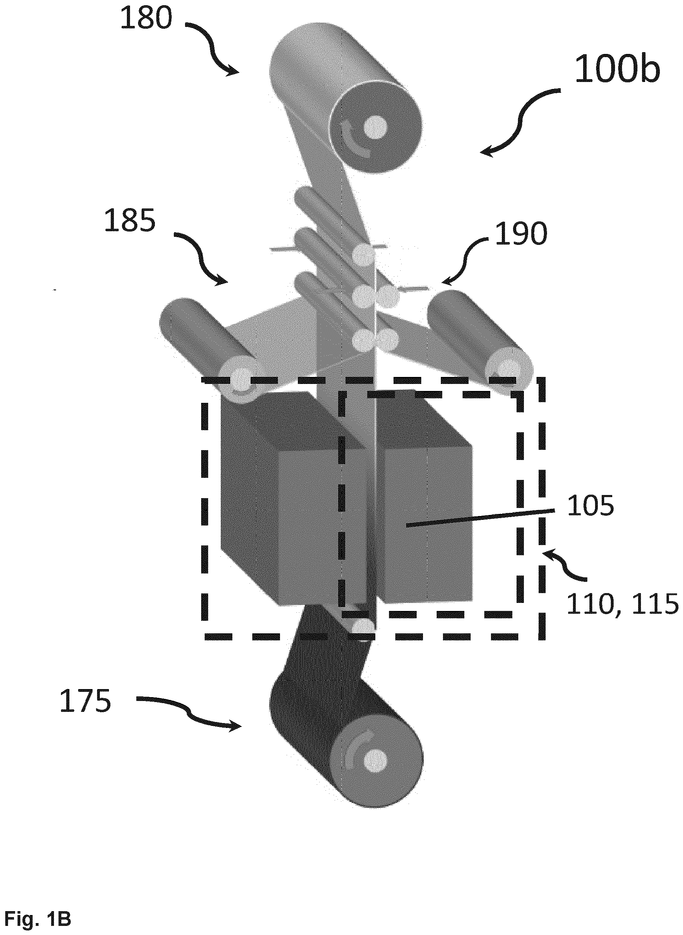

Fig. 1B schematically shows a system 100b with an unwinding unit 175 and a winding unit 180 for processing an electrode foil according to examples of the present disclosure. The system may basically correspond to the system 100a of fig. 1A.

The electrode foil f is unwound from an unwinding unit 175 and passes through a metal application unit 105. Subsequent to the metal application by the metal application unit 105 onto the electrode foil f, a safeguarding measure may be executed through the application of a protective foil onto the surfaces of the electrode foil f by means of a dedicated protective foil application unit 185. In this specific instance, the protective foil is composed of plastic.

The system 100b may further comprise a calendering unit 190 configured to calender the electrode foil f and the applied protective foil. The electrode foil f and the applied protective foil form a layer assembly. The calendering unit 190 enhances the interaction between the metal particles p and the electrode foil f, thereby achieving a more reliable contact between them (in particular, in case the particles arrive on the surface in a solid state), and/or a more uniform and homogeneous reaction between them.

Furthermore, the system 100b comprises a winding unit 180 configured to wind up the electrode foil f and the applied protective foil. Following the calendering process, both the electrode foil f and the protective foil are systematically wound up. In one example, the calendering unit 190 or another device may be configured to set the electrode foil under a predefined tension, when it is wound up.

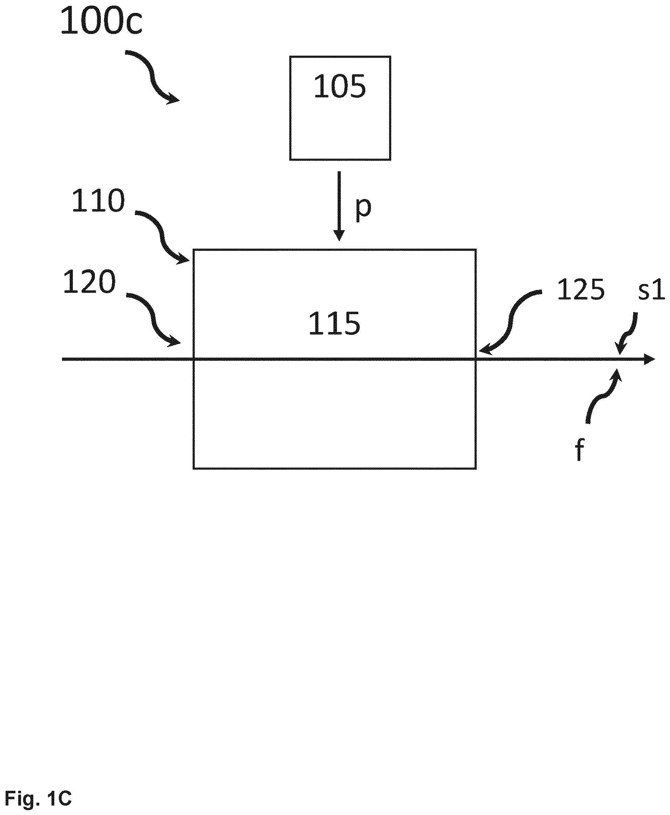

Fig. 1C shows a horizontal arrangement of a system 100c according to examples of the present disclosure. The system may generally correspond to the system of fig. 1A or 1B, unless otherwise described in the following.

Within the configuration of system 100c, a metal application unit 105 is positioned above a housing 110. The housing 110 comprises an inlet 120 and an outlet 125 configured to let an electrode foil f pass through the application space 115. The system may be arranged such that the electrode foil passes through the application space 115 in a substantially horizontal direction. The metal particles p may be thus sprayed from the top onto a first surface s1 of the electrode foil f, ensuring that they remain on the surface, even in a still molten or partially molten state.

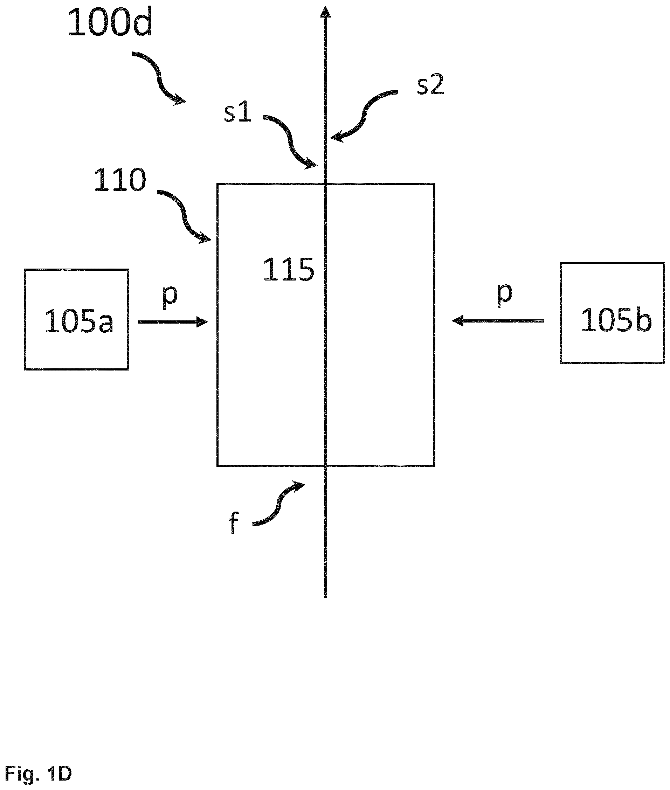

Fig. 1D shows a vertical arrangement of a system 100d according to examples of the present disclosure. The system may generally correspond to the system of fig. 1A or 1B, unless otherwise described in the following.

Within the configuration of system 100d, a first metal application unit 105a is positioned at one side of a housing 110 and a second metal application unit 105b is positioned at the other side of a housing 110. The electrode foil f passes through the application space 115. The metal particles p are sprayed from onto a first surface s1 and a second surface s2 of the electrode foil f. The second surface s2 is opposite to the first surface s1. That means the metal particles p are applied to both sides of the electrode foil f so that the electrode foil f is coated with metal particles p. The system may be arranged such that the electrode foil passes the through the application space 115 in a substantially vertical direction. The metal particles p may be thus sprayed from the left and the right side in a substantially horizontal direction, avoiding that one of the metal application units 105b is required to spray in an upward direction. Anyway, it is noted that also any other orientation of the system is possible.

Fig. 2 shows a flowchart of a method 200 of preparing a metalated electrode foil m according to examples of the present disclosure. For example, the method of fig. 2 may be carried out by a system, as described in context of fig. 1A, 1B, 1C or 1D. In a first operation O1, an electrode foil f is passed through an application space 115 having controlled atmospheric conditions. In a second operation O2, metal particles p are sprayed onto at least one first surface s1 of the electrode foil f in the application space 115, wherein the metal particles p are in situ generated metal microparticles. This process involves the controlled release and dispersion of metal in the form of tiny microparticles, which are generated directly by the molten-metal gas atomizer unit 130. This "in situ" generation eliminates the need for pre-prepared metal powder and ensures a precise and localized deposition onto the designated surface s1 of the electrode foil f. The use of these in situ generated metal microparticles p enhances the adherence and uniformity of the metal coating, contributing to the overall quality and efficiency of the electrode foil f for its intended applications.

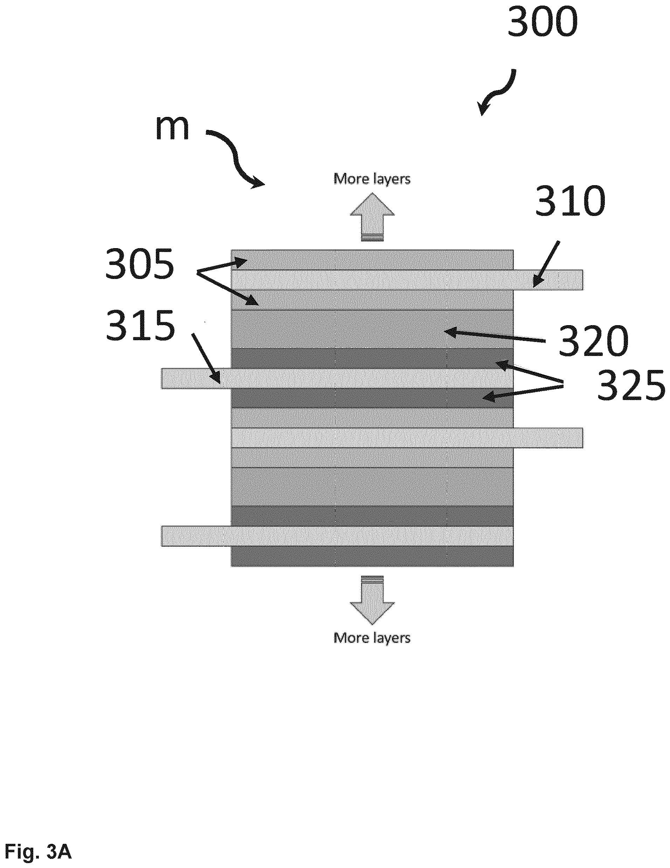

Fig. 3A shows an exemplary multi-layer electrode battery 300 with a metalated electrode foil m after the manufacturing process with a system 100a, 100b, 100c or 100d according to examples of the present disclosure.

The battery 300 may comprise a plurality of layers including the metalated electrode foil m. In particular, the battery comprises at least one anode 305, 310, at least one cathode 325, 315, and an electrolyte 320 (or an electrolyte and a separator, as explained below) in between. At least one of the anode and the cathode may comprise or be made of a processed (i.e. metalated) electrode foil according to the present disclosure.

The anode may comprise an anode current collector 310 (e.g., Al, Cu, Zn, Sn) and an active metal layer 305 (e.g., Li, Na, Mg) on one or both sides of the anode current collector. Furthermore, the cathode may comprise a cathode current collector 315 (e.g., Al, Cu, Zn, Sn) and a cathode coating 325 (e.g., LFP, LMFP, NMC) on one or both sides of the cathode current collector. The battery 300 may, of course, comprise more layers, in particular the above-mentioned layer assembly 305, 310, 315, 320, 325 may be repeated, as shown in fig. 3A.

The electrolyte may be configured as a liquid (or conventional) electrolyte in a separator for conventional battery cells or a solid-state electrolyte for solid-state cells. Accordingly, in case of a conventional liquid electrolyte battery cell, the layer 320 may comprise an electrolyte and a separator. In particular, a porous separator containing liquid electrolyte may be used. In a solid-state battery cell, a solid-state separator may be used that conducts active metal ions. Accordingly, the processed (i.e., metalated) electrode foil according to the present disclosure is not only suitable for conventional battery cells but also for solid-state cells.

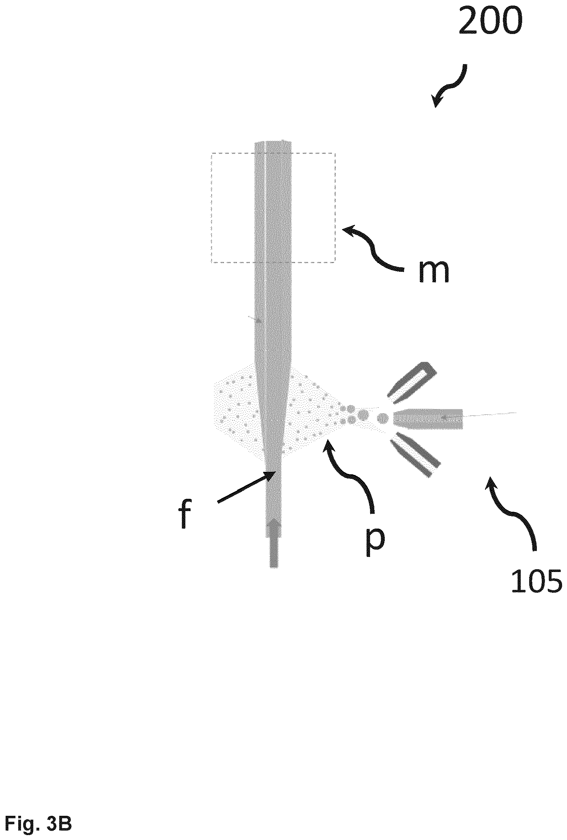

Fig. 3B shows a method 200 of preparing a metalated electrode foil m according to examples of the present disclosure. In this example, molten metal may be sprayed directly onto current collector foil, without a use of electrode coating. For example, in case of lithium, a lithium-coated current collector foil may be used as an anode foil in lithium-metal-anode batteries. Metal-anode batteries do not have conventional anode coatings such as SiOx, graphite, Si/C, etc. The absence of anode coating increases the overall energy density of the battery. However, due to the likelihood of dendrite formation, the application of metal-anodes in conventional liquid electrolyte batteries is challenging. Thus, metal-coated current collectors (i.e., the metal being e.g., Li, Na, K, etc.) can be particularly attractive for corresponding solid-state batteries (e.g., solid-state lithium-ion batteries, solid-state sodium-ion batteries) where dendrite formation is suppressed thanks to the nature of the electrolyte-separator.

The metal application unit 130 comprises a molten-metal gas atomizer unit 130 configured to spray lithium particles p onto both sides of the current collector foil in the application space 115. The current collector can be made of metals like Cu, Al, Zn, Sn, etc. Since the amount or thickness of coated metal can be set as desired, in particular may be relatively high (as schematically shown in fig. 3B), the produced metal-coated current collector may also be suitable as anode electrode foil for solid-state batteries.

The metal-coated current collector foil may thus be configured to be used in a solid-state battery cell.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

## Claims

1. A system (100a, 100b, 100c, 100d) for processing an electrode foil (f), comprising:
- a metal application unit (105, 105a, 105b) comprising:
• a housing (110) providing an application space (115), wherein the metal application unit (105, 105a, 105b) is configured to control atmospheric conditions in the application space (115),
the housing (110) comprising an inlet (120) and an outlet (125) configured to let an electrode foil (f) pass through the application space (115),
• a molten-metal gas atomizer unit (130) configured to spray metal particles (p) onto at least one first surface (s1) of the electrode foil (f) in the application space (115).

2. The system (100a, 100b, 100c, 100d) of claim 1, wherein
the molten-metal atomizer unit (130) comprises at least of:
a crucible (145),
a first injection piston unit (150), and
a first injection nozzle (140).

3. The system (100a, 100b, 100c, 100d) of claim 2, wherein
the molten-metal gas atomizer unit (130) is configured to:
melt the metal in the crucible (145), and
feed the molten metal (165) through the first injection nozzle (140) into a gas flow, such that molten metal droplets are atomized to form the metal particles (p).

4. The system (100a, 100b, 100c, 100d) according to any one of the preceding claims 2 and 3, wherein
the crucible (145) is arranged in a gas chamber (170) configured such that the metal is molten under controlled atmospheric conditions using a predefined gas.

5. The system (100a, 100b, 100c, 100d) according to any one of the preceding claims 3 and 4, wherein
the molten-metal gas atomizer unit (130) comprises a first gas nozzle (135) configured to generate the gas flow.

6. The system (100a, 100b, 100c, 100d) according to any one of the preceding claims, wherein
the metal comprises at least one of:
an alkali metal, such as lithium (Li) and sodium (Na), Potassium (K), and
an alkaline earth metal, such as magnesium (Mg), and/or
the predefined gas and/or the gas of the gas flow is an inert gas, such as Argon.

7. The system (100a, 100b, 100c, 100d) according to any one of the preceding claims, wherein
the molten-metal gas atomizer unit (130) is configured to spray metal particles (p) onto the first surface (s1) of the electrode foil (f) in the application space (115) at different positions along an extension between the inlet (120) and the outlet (130).

8. The system (100a, 100b, 100c, 100d) according to any one of the preceding claims, wherein
the molten-metal gas atomizer unit (130) is further configured to spray metal particles (p) onto a second surface (s2) of the electrode foil (f) in the application space (115), the second surface (s2) being opposite to the first surface (s1).

9. The system (100a, 100b, 100c, 100d) according to any one of the preceding claims, wherein
the molten-metal gas atomizer unit (130) further comprises at least of:
a second injection piston unit, and
a second injection nozzle.

10. The system (100a, 100b, 100c, 100d) according to the preceding claim,
wherein
the molten-metal atomizer unit (130) is further configured to:
feed the molten metal (165) through the second injection nozzle into a gas flow, such that such that molten metal droplets are atomized to form the metal particles (p), wherein
the second injection nozzle is configured to spray metal particles (p) onto the second surface (s2).

11. The system (100a, 100b, 100c, 100d) according to any one of the preceding claims,
further comprising a protective foil application unit (185) configured to apply a protective foil onto the at least one first surface (s1), after the electrode foil (f) has passed through the application space (115).

12. The system (100a, 100b, 100c, 100d) according to any one of the preceding claims, wherein
the system (100a, 100b, 100c, 100d) further comprising a calendering unit (190) configured to calender the electrode foil (f) and the applied protective foil.

13. The system (100a, 100b, 100c, 100d) according to any one of the preceding claims, wherein
the system (100a, 100b, 100c, 100d) further comprising a winding unit (180) configured to wind up the electrode foil (f) and optionally the applied protective foil.

14. The system (100a, 100b, 100c, 100d) according to any one of the preceding claims, wherein
the system (100a, 100b, 100c, 100d) further comprising a feeding unit for feeding the electrode foil (f) to the metal application unit (105, 105a, 105b) with a controlled feeding speed.

15. A method (200) of for preparing a metalated electrode foil (m), comprising:
• passing the electrode foil (f) through an application space (115) having controlled atmospheric conditions, and
• spraying metal particles (p) onto at least one first surface (s1) of the electrode foil (f) in the application space (115).
